(19) Europäisches Patentamt
European Patent Office
Office européen des brevets

(11) **EP 4 046 403 B1**

(12) **EUROPÄISCHE PATENTSCHRIFT**

(45) Veröffentlichungstag und Bekanntmachung des Hinweises auf die Patenterteilung:
**08.11.2023 Patentblatt 2023/45**

(21) Anmeldenummer: **20781321.3**

(22) Anmeldetag: **22.09.2020**

(51) Internationale Patentklassifikation (IPC):
***H04W 4/40*** *(2018.01)*

(52) Gemeinsame Patentklassifikation (CPC):
**H04W 4/40**

(86) Internationale Anmeldenummer:
**PCT/EP2020/076407**

(87) Internationale Veröffentlichungsnummer:
**WO 2021/073839 (22.04.2021 Gazette 2021/16)**

(54) **VERFAHREN ZUM BEREITSTELLEN EINER OBJEKTNACHRICHT ÜBER EIN IN EINER UMGEBUNG EINES VERKEHRSTEILNEHMERS ERKANNTES OBJEKT IN EINEM KOMMUNIKATIONSNETZWERK ZUR KOMMUNIKATION MIT ANDEREN VERKEHRSTEILNEHMERN**

METHOD FOR PROVIDING AN OBJECT MESSAGE ABOUT AN OBJECT DETECTED IN THE ENVIRONMENT OF A ROAD USER IN A COMMUNICATION NETWORK FOR COMMUNICATION WITH OTHER ROAD USERS

PROCÉDÉ DE FOURNITURE D'UN MESSAGE D'OBJET CONCERNANT UN OBJET DÉTECTÉ DANS L'ENVIRONNEMENT D'UN USAGER DE LA ROUTE DANS UN RÉSEAU DE COMMUNICATION POUR LA COMMUNICATION AVEC D'AUTRES USAGERS DE LA ROUTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2019 DE 102019216074**

(43) Veröffentlichungstag der Anmeldung:
**24.08.2022 Patentblatt 2022/34**

(73) Patentinhaber: **Robert Bosch GmbH**
**70442 Stuttgart (DE)**

(72) Erfinder:
• **FUCHS, Hendrik**
**31141 Hildesheim (DE)**
• **LLATSER MARTI, Ignacio**
**31135 Hildesheim (DE)**
• **DOLGOV, Maxim**
**71272 Renningen (DE)**
• **SCHIEGG, Florian Alexander**
**31139 Hildesheim (DE)**
• **HOFMANN, Frank**
**31139 Hildesheim (DE)**
• **WILDSCHUETTE, Florian**
**31139 Hildesheim (DE)**
• **MICHALKE, Thomas**
**71263 Weil Der Stadt (DE)**

(56) Entgegenhaltungen:
**WO-A1-2019/074348     DE-A1-102014 008 746**

**Beschreibung**

Gebiet der Erfindung

Die Erfindung betrifft ein Verfahren, eine Auswerteeinheit, ein Computerprogramm und ein computerlesbares Medium zum Bereitstellen einer Objektnachricht über ein in einer Umgebung eines Verkehrsteilnehmers erkanntes Objekt in einem Kommunikationsnetzwerk zur Kommunikation mit anderen Verkehrsteilnehmern.

Stand der Technik

Eine zunehmende Automatisierung von Fahrzeugen geht mit einem zunehmenden Bedarf an hochzuverlässigen Umgebungsmodellen für eine Umgebung automatisiert fahrender Fahrzeuge einher. Um einen Fahrer unterstützen oder selbst Entscheidungen treffen zu können, ist es erforderlich, dass Fahrzeuge ihre Umgebung wahrnehmen und mögliche Gefahren und Gefahren möglichst genau erkennen. Zu diesem Zweck können Daten, die von fahrzeugseitigen Sensoren wie etwa Videokameras, Radar- oder Lidarsensoren erfasst werden, aggregiert und in das Umgebungsmodell des Verkehrsteilnehmers einbezogen werden.

In diesem Zusammenhang wächst auch das Interesse an der Fahrzeug-zu-Infrastruktur-Kommunikation (V2I) und der Fahrzeug-zu-Fahrzeug-Kommunikation (V2V), zusammenfassend auch als Fahrzeug-zu-X-Kommunikation (V2X) bezeichnet. Die V2X-Kommunikation ermöglicht es, ein Umgebungsmodell durch Ergänzung mit Daten aus eingehenden V2X-Nachrichten zu verbessern.

Die kollektive Wahrnehmung beruht darauf, dass Nachrichten über die aktuelle Umgebung des Verkehrsteilnehmers an andere verbundene Stationen, etwa andere Fahrzeuge, Fußgänger oder Infrastrukturelemente, über V2X-Kommunikation gesendet oder von den verbundenen Stationen empfangen werden, wie beispielsweise beschrieben in ETSI TR 103 562, Intelligent Transport System (ITS); Vehicular Communications; Basic Set of Applications; Analysis of the Collective Perception Service (CPS). Diese Nachrichten, auch Collective Perception Messages (CPM) genannt, können beispielsweise Daten zu erkannten Objekten wie anderen Verkehrsteilnehmern, Hindernissen, Fahrbahnmarkierungen, Orientierungspunkten, Ampeln oder freie Flächen in abstrakten Beschreibungen enthalten. Ein typisches Szenario sind beispielsweise Autobahnauffahrten, wo Nachrichten über erkannte Objekte zwischen auffahrenden Fahrzeugen und auf der Autobahn fahrenden Fahrzeugen ausgetauscht werden.

Solche Nachrichten können beispielsweise Informationen über ein Ego-Fahrzeug und dessen Sensoren sowie eine Liste erkannter Objekte umfassen. Die kollektive Wahrnehmung kann die Umgebungsunsicherheit beteiligter Stationen in Bezug auf deren jeweilige aktuelle Umgebung verringern, indem eine vergleichsweise höhere Anzahl von Objekten wahrgenommen werden kann und auch die Qualität der wahrgenommenen Objektdaten verbessert werden kann.

Derzeit wird vom Ausschuss für intelligente Verkehrssysteme des Europäischen Instituts für Telekommunikationsnormen (ETSI) ein Dienst für kollektive Wahrnehmung zur Normung in der EU vorgeschlagen. Der Vorschlag betrifft vor allem den Inhalt der ausgetauschten Nachrichten und die Häufigkeit, mit der die Nachrichten generiert werden sollen.

In EP 3 678 438 A1 wird ein Verfahren zur Übertragung von V2X-Nachrichten in einem drahtlosen Kommunikationssystem beschrieben. Hierbei kann für jede V2X-Nachricht ein Wichtigkeitsgrad bestimmt werden. Ein hoher Wichtigkeitsgrad kann beispielsweise für V2X-Nachrichten, die Informationen über ein nahegelegenes Objekt enthalten, bestimmt werden. Die V2X-Nachrichten können dann in Abhängigkeit von ihrem jeweiligen Wichtigkeitsgrad in dem Kommunikationssystem übertragen werden.

In DE 10 2014 008 746 A1 wird ein Verfahren zur Übertragung von Nachrichten zwischen Infrastruktureinrichtungen und einem oder mehreren Kraftfahrzeugen beschrieben.

In WO 2019/074348 A1 wird ein Verfahren zur Übertragung von Sidelink-Nachrichten beschrieben.

Vorteile der Erfindung

Ausführungsformen der vorliegenden Erfindung ermöglichen es in vorteilhafter Weise, aus einer Anzahl von Objekten, die in der Umgebung eines Verkehrsteilnehmers sensorisch erfasst und erkannt wurden, diejenigen Objekte auszuwählen, die eine besondere Relevanz für den Verkehrsteilnehmer wie auch für andere Verkehrsteilnehmer haben. Die Relevanz kann anhand mehrerer Kriterien berechnet werden. Insbesondere kann die Relevanz dadurch berechnet werden, dass verschiedenen Eigenschaften der erkannten Objekte verschiedene Prioritätswerte zugeordnet sind und aus diesen Prioritätswerten eine Gesamtpriorität berechnet wird. Anhand der je einem erkannten Objekt zugeordneten Gesamtpriorität kann nun bestimmt werden, ob eine Nachricht bezüglich des betreffenden Objekts generiert und an andere Verkehrsteilnehmer gesendet werden soll bzw., falls die Nachricht eine Liste erkannter Objekte enthält, ob das erkannte Objekt in die Liste erkannter Objekte aufgenommen werden soll. Hierzu kann die Gesamtpriorität beispielsweise mit einem vordefinierten Schwellenwert verglichen werden. Dies hat den Vorteil, dass für jedes erkannte Objekt nur ein einziger Schwellenwertvergleich durchgeführt werden muss, um zu entscheiden, ob eine Objektnachricht generiert werden soll oder nicht, anstatt, wie bisher üblich, für jede der detektierten Eigenschaften des Objekts einen eigenen Schwellenwertvergleich durchzuführen.

Ein erster Aspekt der Erfindung betrifft Verfahren zum Bereitstellen einer Objektnachricht über ein in einer Umgebung eines Verkehrsteilnehmers erkanntes Objekt in einem Kommunikationsnetzwerk zur Kommunikation mit anderen Verkehrsteilnehmern. Der Verkehrsteilnehmer umfasst eine Sensorik zum Erfassen der Umgebung und eine Auswerteeinheit zum Auswerten von durch die Sensorik erzeugten Sensordaten. Ferner ist die Auswerteeinheit konfiguriert, um Objektnachrichten über das Kommunikationsnetzwerk zu übertragen, d. h. zu senden und/oder zu empfangen. Das Verfahren umfasst die Schritte des unabhängigen Anspruchs 1.

Die Sensorik kann beispielsweise eine Kamera, einen Radar- oder Lidarsensor umfassen. Die Auswerteeinheit kann beispielsweise eine Komponente eines Bordcomputers des Verkehrsteilnehmers, etwa eines Fahrzeugs, sein. Ferner kann die Auswerteeinheit ausgeführt sein, um den Verkehrsteilnehmer zu steuern, etwa zu lenken, zu bremsen und/oder zu beschleunigen. Der Verkehrsteilnehmer kann eine Aktorik aufweisen, die durch die Auswerteeinheit ansteuerbar ist. Die Aktorik kann beispielsweise einen Lenk- oder Bremsaktor oder ein Motorsteuergerät umfassen. Auch kann die Auswerteeinheit ausgeführt sein, um den Verkehrsteilnehmer basierend auf von anderen Verkehrsteilnehmern bereitgestellten und über das Kommunikationsnetzwerk empfangenen Objektnachrichten zu steuern.

Unter einem Verkehrsteilnehmer kann beispielsweise ein Kraftfahrzeug, etwa ein Pkw, Lkw, Bus oder ein Motorrad, ein Element einer Verkehrsinfrastruktur, auch Roadside Unit genannt, ein Fahrrad, ein Tretroller oder ein Fußgänger verstanden werden.

Unter einem Kommunikationsnetzwerk kann ein Netzwerk zur Verkehrsvernetzung, beispielsweise von Fahrzeug zu Fahrzeug (V2V oder Car2Car), von Fahrzeug zu Straße (V2R), von Fahrzeug zu Infrastruktur (V2I), von Fahrzeug zu Netzwerk (V2N) oder von Fahrzeug zu Personen (V2P), verstanden werden. Beispielsweise können die Objektnachrichten über eine drahtlose Kommunikationsverbindung wie etwa eine WLAN-, Bluetooth- oder Mobilfunkverbindung zwischen Teilnehmern des Kommunikationsnetzwerkes übertragen werden.

Eine Objektnachricht kann beispielsweise neben einem Header eine Liste mit erkannten Objekten, Angaben zu dem Verkehrsteilnehmer, etwa zu Lenkwinkel, Position, Richtung oder Geschwindigkeit des Verkehrsteilnehmers, und Angaben zur Sensorik des Verkehrsteilnehmers, etwa zu einem Sichtfeld oder einer Reichweite der Sensorik, enthalten. Die erkannten Objekte können unter anderem beispielsweise durch eine Position, Lage, Geschwindigkeit, Größe oder Objektklasse beschrieben sein.

Der Bewegungsparameter kann beispielsweise eine Position, Lage, Geschwindigkeit, Beschleunigung oder voraussichtliche Trajektorie des Objekts in einem fest mit dem Verkehrsteilnehmer verbundenen Fahrzeugkoordinatensystem und/oder einem äußeren Koordinatensystem mit geografischen Koordinaten beschreiben.

Unter einem weiteren Objektparameter kann im Allgemeinen ein Parameter verstanden werden, der unabhängig von dem mindestens einen Bewegungsparameter des Objekts ermittelt wird. Was konkret unter einem Objektparameter verstanden werden kann, wird anhand der nachfolgenden Ausführungsformen näher erläutert.

Unter einer Objektübertragungspriorität kann ein berechneter Gesamtprioritätswert verstanden werden. Dabei kann jedem erkannten Objekt genau eine Objektübertragungspriorität zugeordnet sein. Die Objektübertragungspriorität kann aus mindestens einem Parameter bezüglich mindestens einer Eigenschaft des erkannten Objekts berechnet sein, beispielsweise durch Addition und/oder Multiplikation des Bewegungsparameters mit mindestens einem weiteren Objektparameter. Alternativ ist es möglich, dass basierend auf dem Bewegungsparameter ein dem Bewegungsparameter zugeordneter Prioritätswert und basierend auf dem weiteren Objektparameter ein dem weiteren Objektparameter zugeordneter Prioritätswert berechnet werden und aus den Prioritätswerten dann die Objektübertragungspriorität berechnet wird. Mit anderen Worten kann der Bewegungs- bzw. weitere Objektparameter zunächst in geeigneter Weise in einen entsprechenden Prioritätswert umgerechnet werden, bevor die Berechnung der Objektübertragungspriorität aus den Prioritätswerten erfolgt. Bei der Umrechnung in den Prioritätswert kann der Bewegungs- bzw. weitere Objektparameter entsprechend seiner Wichtigkeit oder Relevanz für den Verkehrsteilnehmer gewichtet werden. Somit können verschiedenartige Parameter miteinander vergleichbar gemacht werden.

Um zu entscheiden, ob das erkannte Objekt Gegenstand einer Objektnachricht sein soll oder nicht, d. h. beispielsweise in die Liste erkannter Objekte der Objektnachricht aufgenommen werden soll oder nicht, kann die Objektübertragungspriorität etwa mit einem hinterlegten Schwellenwert verglichen werden. Dabei kann die Objektnachricht mit dem erkannten Objekt generiert werden, wenn die Objektübertragungspriorität über dem Schwellenwert liegt. Umgekehrt kann die Objektnachricht nicht generiert oder ohne das erkannte Objekt generiert werden, wenn die Objektübertragungspriorität unter dem Schwellenwert liegt.

Ein zweiter Aspekt der Erfindung betrifft eine Auswerteeinheit, die ausgeführt ist, um das Verfahren, wie es im Vorangehenden und im Folgenden beschrieben ist, durchzuführen. Merkmale des Verfahrens, wie es im Vorangehenden und im Folgenden beschrieben ist, können auch Merkmale der Auswerteeinheit sein.

Weitere Aspekte der Erfindung betreffen ein Computerprogramm, das, wenn es auf einem Prozessor ausgeführt wird, das Verfahren, wie es im Vorangehenden und im Folgenden beschrieben ist, durchführt, sowie ein computerlesbares Medium, auf dem ein derartiges Computerprogramm gespeichert ist.

Bei dem computerlesbaren Medium kann es sich beispielsweise um eine Festplatte, ein USB-Speichergerät, einen RAM, ROM, EPROM oder Flash-Speicher handeln. Das computerlesbare Medium kann auch ein einen Download eines Programmcodes ermöglichendes Datenkommunikationsnetzwerk wie etwa das Internet sein. Das computerlesbare Medium kann transitorisch oder nicht transitorisch sein.

Merkmale des Verfahrens, wie es im Vorangehenden und im Folgenden beschrieben ist, können auch Merkmale des Computerprogramms und/oder des computerlesbaren Mediums sein.

Ideen zu Ausführungsformen der vorliegenden Erfindung können unter anderem als auf den nachfolgend beschriebenen Gedanken und Erkenntnissen beruhend angesehen werden.

Der Austausch weiter oben erläuterter Objektnachrichten zwischen verbundenen Stationen des Kommunikationsnetzwerkes kann einen entscheidenden Vorteil für automatisierte Fahrfunktionen mit sich bringen, indem das Umgebungsmodell des Verkehrsteilnehmers verbessert werden kann. In der Regel sind nicht alle erkannten Objekte gleich relevant für das Umgebungsmodell. Beispielsweise kann ein auf einer Straße befindliches Objekt, das eine potenzielle Gefährdung für mehrere Fahrzeugen darstellen kann, einen höheren funktionalen Nutzen für den Verkehrsteilnehmer darstellen als ein auf einem Gehweg befindliches Objekt. Andererseits kann die periodische Übertragung solcher Objektnachrichten zu einer Kanalüberlastung und damit zu einer verringerten Leistung des Kommunikationsnetzwerkes führen. In Bezug auf die zu übertragenden Objekte und die Übertragungshäufigkeit (ein und dasselbe Objekt kann beispielsweise auch mehrfach gesendet werden, wenn es mehr als einmal durch die Bordsensoren erkannt wird) sollte also ein Kompromiss zwischen funktionalem Nutzen der Objekte und Netzauslastung gefunden werden.

Es ist also wichtig, geeignete Regeln für die Nachrichtengenerierung zu entwerfen, mit denen ein guter Kompromiss zwischen beiden Kriterien erzielt werden kann. Die hier beschriebenen Generierungsregeln basieren auf der Zuweisung von Prioritäten zu den erkannten Objekten. Die Priorität eines erkannten Objekts wird entsprechend dem geschätzten funktionalen Nutzen des erkannten Objekts für den Verkehrsteilnehmer oder andere Verkehrsteilnehmer berechnet.

Derzeitige Generierungsregeln basieren in erster Linie auf dynamischen Eigenschaften der erkannten Objekte, d. h. auf Änderungen deren Position und Geschwindigkeit. Andere, ebenfalls wichtige Kriterien werden darin weniger berücksichtigt.

Der hier beschriebene Ansatz ermöglicht hingegen eine differenzierte Abschätzung des funktionalen Nutzens der erkannten Objekte auf Basis entsprechender Generierungsregeln.

Gemäß einer Ausführungsform können der Bewegungsparameter und der weitere Objektparameter miteinander addiert und/oder multipliziert werden, um die Objektübertragungspriorität zu berechnen. Zusätzlich oder alternativ kann zumindest einer der beiden Parameter gewichtet werden und die Objektübertragungspriorität aus dem gewichteten Parameter berechnet werden. Die Gewichtung kann beispielsweise durch Multiplikation oder Potenzierung des betreffenden Parameters mit einem geeigneten Gewichtungsfaktor erfolgen. Die Gewichtungsfaktoren können beispielsweise vorgegeben sein und in der Auswerteeinheit hinterlegt sein. Dadurch können verschiedenartige Parameter mit geringem Aufwand miteinander vergleichbar gemacht werden.

Gemäß einer Ausführungsform kann der Bewegungsparameter angeben, ob sich das erkannte Objekt längs und/oder quer zu einer Fahrtrichtung des Verkehrsteilnehmers bewegt. Dabei kann der Bewegungsparameter höher gewichtet werden, wenn sich das erkannte Objekt quer zur Fahrtrichtung bewegt. Zusätzlich oder alternativ kann der Bewegungsparameter niedriger gewichtet werden, wenn sich das erkannte Objekt längs zur Fahrtrichtung bewegt. Dadurch kann die Objektübertragungspriorität mit höherer Genauigkeit berechnet werden.

Gemäß einer Ausführungsform umfasst das Verfahren weiter: Einfügen des erkannten Objekts in ein die Umgebung des Verkehrsteilnehmers repräsentierendes Umgebungsmodell, wobei das Umgebungsmodell den Bewegungsparameter und/oder den weiteren Objektparameter speichert. Dabei können der gespeicherte Bewegungsparameter und/oder der gespeicherte weitere Objektparameter basierend auf den Sensordaten in aufeinanderfolgenden Zeitschritten aktualisiert werden. Ferner kann eine Änderung des gespeicherten Bewegungsparameters und/oder eine Änderung des gespeicherten weiteren Objektparameters zwischen mindestens zwei Zeitschritten ermittelt werden. Aus der Änderung des gespeicherten Bewegungsparameters und/oder der Änderung des gespeicherten weiteren Objektparameters kann dann die Objektübertragungspriorität berechnet werden.

Mit anderen Worten kann ermittelt werden, inwiefern sich der Bewegungsparameter bzw. der weitere Objektparameter durch eine Aktualisierung des Umgebungsmodells mit Sensordaten aus einer aktuellen Messung ändert. Je nach Grad der Änderung kann auf eine höhere oder niedrigere Priorität des erkannten Objekts geschlossen werden. Beispielsweise kann die Priorität umso höher sein, je größer die Änderung ausfällt.

Unter einem Umgebungsmodell kann eine modellhafte, insbesondere dreidimensionale Repräsentation der Umgebung des Verkehrsteilnehmers verstanden werden. Anders ausgedrückt kann es sich bei dem Umgebungsmodell um eine dynamische Datenstruktur handeln, in der relevante Objekte wie etwa andere Fahrzeuge oder Infrastrukturelemente in einem gemeinsamen Bezugssystem mit dem Verkehrsteilnehmer in Ort und Zeit dargestellt werden können.

Eine Eigenbewegung des Verkehrsteilnehmers kann beispielsweise durch ein Eigenbewegungsmodell, im einfachsten Fall etwa ein kinematisches, lineares Einspurmodell, oder basierend auf einer Fahrerabsichtserkennung ermittelt werden.

Das Umgebungsmodell kann beispielsweise unter anderem einen Verkehrsraum des Verkehrsteilnehmers modellieren, etwa durch eine Straßenmarkierungserkennung, eine Erkennung frei befahrbarer Bereiche, eine Lokalisierung des Verkehrsteilnehmers relativ zu einem Fahrstreifen oder in einer digitalen Karte oder durch eine Erkennung von Verkehrszeichen oder Verkehrssignalanlagen.

Die Sensorik kann Objekte in der Umgebung des Verkehrsteilnehmers beispielsweise fortlaufend erfassen und zeitlich verfolgen, auch Tracking genannt. Dabei können Zustände der Objekte, beispielsweise deren Position, Lage oder Geschwindigkeit, geschätzt werden. Die Sensordaten können fusionierte Daten einer oder mehrerer Sensoreinheiten der Sensorik umfassen. Zusätzlich können Informationen aus einer digitalen Karte oder fahrzeugexterne, über das Kommunikationsnetzwerk empfangene Informationen zur Erkennung von Objekten mit dem Umgebungsmodell genutzt werden.

Beim Erkennen der Objekte können die Objekte detektiert und/oder klassifiziert werden, auch Objekt-Diskriminierung genannt. Bei einer Detektion wird entschieden, ob ein Objekt vorhanden ist. Bei einer Klassifizierung wird ein Objekt einer vordefinierten Objektklasse zugeordnet, beispielsweise einer Objektklasse "Fahrzeug", "Baum", "Gebäude" oder "Person".

Ein erkanntes Objekt kann etwa als Punktmodell oder ausgedehntes zwei- oder dreidimensionales Modell mit Angaben zu Position, Lage, Geschwindigkeit, Beschleunigung, Gierwinkel oder Gierrate relativ zum Verkehrsteilnehmer im Umgebungsmodell gespeichert sein. Diese Angaben können basierend auf den Sensordaten der Sensorik in mehreren aufeinanderfolgenden Zeitschritten fortlaufend geschätzt, d. h. aktualisiert werden.

Gemäß einer Ausführungsform kann eine Messsicherheit bezüglich des erkannten Objekts ermittelt werden. Dabei kann die Objektübertragungspriorität aus der Messsicherheit berechnet werden. Unter einer Messsicherheit kann im Allgemeinen ein Maß für eine Genauigkeit oder Vertrauenswürdigkeit einer Objekterkennung verstanden werden. Mit anderen Worten kann die Messsicherheit angeben, ob oder in welchem Maß das erkannte Objekt mit einem tatsächlich vorhandenen Objekt übereinstimmt. Beispielsweise kann die Messsicherheit durch einen Wert einer Existenz- oder Zustandswahrscheinlichkeit, einer Kovarianz oder eines sonstiges Wahrscheinlichkeitsmaßes bezüglich einer Erfassung, Detektion und/oder Klassifikation eines Objekts basierend auf den Sensordaten beschrieben sein.

Gemäß einer Ausführungsform kann basierend auf den Sensordaten mindestens ein weiteres Objekt in der Umgebung des Verkehrsteilnehmers erkannt werden. Dabei können Zeitspannen bis zu einer möglichen Kollision (englisch time to collision oder kurz TTC genannt) des erkannten Objekts mit dem erkannten weiteren Objekt und/oder dem Verkehrsteilnehmer ermittelt werden. Ferner kann aus den ermittelten Zeitspannen die kürzeste Zeitspanne ausgewählt werden. Die Objektübertragungspriorität kann dann aus dieser ausgewählten kürzesten Zeitspanne berechnet werden. Beispielsweise kann die Objektübertragungspriorität umso größer sein, je kürzer die ausgewählte kürzeste Zeitspanne ist.

Gemäß einer Ausführungsform kann ein Verdeckungsgrad ermittelt werden, der eine Verdeckung mindestens eines weiteren Objekts in der Umgebung des Verkehrsteilnehmers durch das erkannte Objekt anzeigt. Die Objektübertragungspriorität kann dabei aus dem Verdeckungsgrad berechnet werden. Der Verdeckungsgrad kann beispielsweise durch einen Wert einer durch das erkannte Objekt verdeckten Fläche beschrieben sein.

Gemäß einer Ausführungsform kann das Objekt mindestens einer Objektklasse zugeordnet werden. Jeder Objektklasse kann ein Prioritätswert zugeordnet sein. Die Objektübertragungspriorität kann aus dem Prioritätswert der dem Objekt zugeordneten Objektklasse berechnet werden. Unterschiedliche Objektklassen können für den Verkehrsteilnehmer unterschiedlich relevant sein. Dementsprechend können sich unterschiedliche Objektklassen in den ihnen zugeordneten Prioritätswerten voneinander unterscheiden. Unter einer Objektklasse kann eine vordefinierte Objektkategorie oder Objektart verstanden werden. Die Zuordnung des Objekts zu mindestens einer Objektklasse, auch Klassifikation genannt, kann beispielsweise mit einem Machine-Learning-Algorithmus durchgeführt werden. Das Objekt kann auch mehreren Objektklassen zugeordnet werden. In diesem Fall können die einzelnen Prioritätswerte der dem Objekt zugeordneten Objektklassen in einem Einzelwert zusammengefasst werden. Der Einzelwert kann dann zur Berechnung der Objektübertragungspriorität herangezogen werden.

Gemäß einer Ausführungsform kann eine Übertragungszeitspanne seit einem letzten Senden und/oder Empfangen einer früheren Objektnachricht über das erkannte Objekt über das Kommunikationsnetzwerk ermittelt werden. Dabei kann die Objektübertragungspriorität aus der Übertragungszeitspanne berechnet werden. Ebenso wie der Verkehrsteilnehmer können auch andere, benachbarte Verkehrsteilnehmer konfiguriert sein, um Objektnachrichten über Objekte in der Umgebung des Verkehrsteilnehmers über das Kommunikationsnetzwerk zu versenden. Die Auswerteeinheit des Verkehrsteilnehmers kann diese Objektnachrichten beispielsweise empfangen und zur Aktualisierung seines eigenen Umgebungsmodells in geeigneter Weise verarbeiten. Anhand der Übertragungszeitspanne können Rückschlüsse auf eine Aktualität des erkannten Objekts gezogen werden. Beispielsweise kann die Objektübertragungspriorität umso größer sein, je länger die Übertragungszeitspanne ist.

Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

    Fig. 1 zeigt schematisch ein Fahrzeug mit einer Auswerteeinheit gemäß einem Ausführungsbeispiel der Erfindung.

    Fig. 2 zeigt schematisch ein Auswertemodul einer Auswerteeinheit aus Fig. 1.

    Fig. 3 zeigt ein Ablaufdiagramm eines Verfahrens gemäß einem Ausführungsbeispiel der Erfindung.

Die Figuren sind lediglich schematisch und nicht maßstabsgetreu. Gleiche Bezugszeichen bezeichnen in den Figuren gleiche oder gleichwirkende Merkmale.

Ausführungsformen der Erfindung

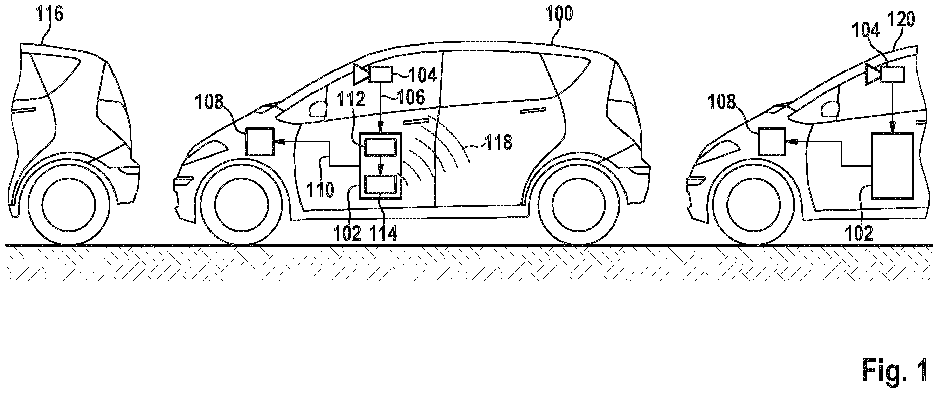

Fig. 1 zeigt ein Fahrzeug 100 mit einer Auswerteeinheit 102, die mit einer Sensorik 104 des Fahrzeugs 100 verbunden ist, um von der Sensorik 104 erzeugte Sensordaten 106 zu verarbeiten. Die Sensorik 104 ist ausgeführt, um eine Umgebung des Fahrzeugs 100 zu überwachen. Beispielhaft ist die Sensorik 104 hier als Kamera realisiert. Die Sensorik 104 kann jedoch auch mehrere, verschiedenartige Sensoreinheiten umfassen. So kann die Sensorik 104 zusätzlich oder alternativ zu einer Kamera beispielsweise mindestens einen Radar-, Lidar- oder Ultraschallsensor aufweisen.

Des Weiteren ist die Auswerteeinheit 102 mit einer Aktorik 108 des Fahrzeugs 100 verbunden. Die Aktorik 108 kann beispielsweise einen Lenk- oder Bremsaktor oder einen Aktor zur Motorsteuerung umfassen. Die Auswerteeinheit 102 kann ausgeführt sein, um basierend auf den Sensordaten 106 ein Steuersignal 110 zur Ansteuerung der Aktorik 108 zu erzeugen, um das Fahrzeug 100 automatisiert zu steuern, d. h. zu lenken, zu bremsen, zu beschleunigen oder entsprechend einer vorgegebenen Route in einer digitalen Karte zu navigieren. Zusätzlich oder alternativ kann die Auswerteeinheit 102 ausgeführt sein, um basierend auf den Sensordaten 106 ein Signal zur Fahrerinformation zu erzeugen.

Die Auswerteeinheit 102 umfasst ein Auswertemodul 112 und ein mit dem Auswertemodul verbundenes Kommunikationsmodul 114, das konfiguriert ist, um Daten über ein Kommunikationsnetzwerk zu übertragen. Das Kommunikationsnetzwerk vernetzt das Fahrzeug 100 mit weiteren Verkehrsteilnehmern, etwa über eine drahtlose Kommunikationsverbindung. Die Module 112, 114 können in Hard- und/oder Software implementiert sein.

Das Auswertemodul 112 ist konfiguriert, um die Sensordaten 106 von der Sensorik 104 zu empfangen und diese zur Erkennung von Objekten in der Umgebung des Fahrzeugs 100 zu verarbeiten und auszuwerten. In diesem Beispiel erkennt das Auswertemodul 112 basierend auf den Sensordaten 106 ein weiteres Fahrzeug 116, das dem Fahrzeug 100 vorausfährt. Beispielsweise erkennt das Auswertemodul 112 eine Position, Geschwindigkeit und Objektklasse des weiteren Fahrzeugs 116. Ferner berechnet das Auswertemodul 112 basierend auf der Position, Geschwindigkeit und Objektklasse des weiteren Fahrzeugs 116 eine Objektübertragungspriorität, die anzeigt, wie relevant das weitere Fahrzeug 116 für das Fahrzeug 100 oder auch für eine gesamte Fahrumgebung ist. Je nach berechneter Objektübertragungspriorität entscheidet das Auswertemodul 112, ob eine Objektnachricht 118, die Informationen über das weitere Fahrzeug 116, hier dessen Position, Geschwindigkeit und Objektklasse, enthält, in dem Kommunikationsnetzwerk bereitgestellt werden soll. In diesem Beispiel stellt das Auswertemodul 112 eine ausreichend hohe Objektübertragungspriorität fest und generiert dementsprechend die Objektnachricht 118 bezüglich des weiteren Fahrzeugs 116. Das Kommunikationsmodul 114 versendet die Objektnachricht 118 über das Kommunikationsnetzwerk. Die Objektnachricht 118 kann beispielsweise von einem dritten Fahrzeug 120 empfangen werden, das ähnlich wie das Fahrzeug 100 konfiguriert sein kann, um über das Kommunikationsnetzwerk mit anderen Verkehrsteilnehmern zu kommunizieren.

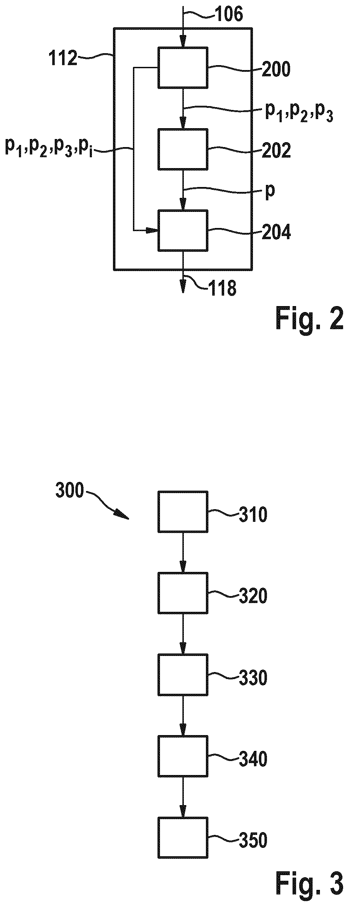

Fig. 2 zeigt schematisch eine mögliche Konfiguration des Auswertemoduls 112 aus Fig. 1. Das Auswertemodul 112, das als eine Implementierung eines Umgebungsmodells des Fahrzeugs 100 in Hard- und/oder Software aufgefasst werden kann, umfasst eine Erkennungskomponente 200, die die Sensordaten 106 empfängt und aus den Sensordaten 106 beispielsweise eine Geschwindigkeit und Beschleunigung des weiteren Fahrzeugs 116 bestimmt. Ferner bestimmt die Erkennungskomponente 200 eine Objektklasse des weiteren Fahrzeugs 116, dem hier beispielsweise die Objektklasse "Fahrzeug" zugeordnet wird. Dementsprechend gibt die Erkennungskomponente 200 drei Parameter $p_1$, $p_2$, $p_3$ aus, wobei der erste Parameter $p_1$ einen Betrag der Geschwindigkeit des weiteren Fahrzeugs 116, der zweite Parameter $p_2$ einen Betrag der Beschleunigung des weiteren Fahrzeugs 116 und der dritte Parameter $p_3$ einen abhängig von der erkannten Objektklasse des weiteren Fahrzeugs 116 bestimmten Prioritätswert beschreibt.

Die Parameter $p_1$, $p_2$, $p_3$ gehen in eine Prioritätsberechnungskomponente 202 ein, die aus den Parametern $p_1$, $p_2$, $p_3$ die Objektübertragungspriorität $p$ berechnet. Dazu können die Parameter $p_1$, $p_2$, $p_3$ beispielsweise gewichtet werden, wie nachfolgend näher beschrieben.

Eine Nachrichtenerzeugungskomponente 204 ist konfiguriert, um basierend auf der Objektübertragungspriorität p zu bestimmen, ob eine Objektnachricht bezüglich des weiteren Fahrzeugs 116 versendet werden soll. Hierzu vergleicht die Nachrichtenerzeugungskomponente 204 die Objektübertragungspriorität p beispielsweise mit einem hinterlegten Schwellenwert. In diesem Beispiel ist die Objektübertragungspriorität p größer als der Schwellenwert. Dementsprechend erzeugt die Nachrichtenerzeugungskomponente 204 die Objektnachricht 118 mit Informationen zu dem erkannten weiteren Fahrzeug 116. Die Objektnachricht 118 kann beispielsweise die Parameter $p_1$, $p_2$, $p_3$ umfassen. Zusätzlich kann die Objektnachricht 118 weitere Parameter $p_i$ über weitere erkannte Eigenschaften des weiteren Fahrzeugs 116 umfassen. Die weiteren Parameter $p_i$ werden dabei von der Erkennungskomponente 200 basierend auf den Sensordaten 106 ermittelt und bereitgestellt.

Fig. 3 zeigt ein Ablaufdiagramm eines Verfahrens 300, das beispielsweise von der Auswerteeinheit 102 aus den Figuren 1 und 2 durchgeführt werden kann.

Dabei werden in einem ersten Schritt 310 die Sensordaten 106 empfangen.

In einem zweiten Schritt 320 wird basierend auf den Sensordaten 106 eine Objekterkennung durchgeführt. Dabei wird das weitere Fahrzeug 116 erkannt. Genauer wird mindestens ein Bewegungsparameter $p_1$, $p_2$ und/oder mindestens ein weiterer Objektparameter $p_3$ bezüglich des weiteren Fahrzeugs 116 geschätzt. Die Schätzung kann fortlaufend in mehreren aufeinanderfolgenden Zeitschritten erfolgen. Mit anderen Worten können die Parameter $p_1$, $p_2$, $p_3$ basierend auf den Sensordaten 106 fortlaufend aktualisiert werden.

In einem dritten Schritt 330 werden die Parameter $p_1$, $p_2$, $p_3$ zu der Objektübertragungspriorität p zusammengefasst.

In einem vierten Schritt 340 wird die Objektübertragungspriorität p ausgewertet, um zu entscheiden, ob die Objektnachricht 118 bezüglich des weiteren Fahrzeugs 116 generiert werden soll oder nicht.

Ist die Objektübertragungspriorität p ausreichend hoch, so wird die Objektnachricht 118 in einem fünften Schritt 350 generiert und über das Kommunikationsnetzwerk an andere Verkehrsteilnehmer versendet, etwa an die weiteren Fahrzeuge 116 und 120.

Nachfolgend werden verschiedene Ausführungsbeispiele nochmals mit anderen Worten beschrieben.

Die Auswerteinheit 102 kann beispielsweise konfiguriert sein, um ein Umgebungsmodell des Fahrzeugs 100 zu berechnen. In dem Umgebungsmodell kann eine Liste von Objekten, die von der Sensorik 104 erfasst werden, gespeichert sein. Dabei hat jedes erkannte Objekt eine ihm zugeordnete Objektübertragungspriorität p. Jedes Mal, wenn eine neue Objektnachricht generiert wird, werden für jedes erkannte Objekt mehrere Prioritätswerte $p_i$ berechnet und miteinander zu der Objektübertragungspriorität p kombiniert. Anders ausgedrückt wird die Objektübertragungspriorität p nicht im Umgebungsmodell gespeichert, sondern auf Basis von Objektdaten im Umgebungsmodell berechnet. Die einzelnen Prioritätswerte $p_i$ können beispielsweise auf folgenden Kriterien bzw. Fragestellungen basieren.

1. Wie genau und zuverlässig ist die Objekterkennung?

Dazu wird eine Messsicherheit bezüglich des erkannten Objekts, hier des weiteren Fahrzeugs 116, berechnet. Messungen mit hoher Messsicherheit, d. h. mit hoher Konfidenz, sollten mit höherer Priorität übertragen werden:
$p_4$ = Messsicherheit

2. In welchem Maß werden Objektdaten im Umgebungsmodell durch die Sensordaten 106 verbessert?

Dies kann mit verschiedenen komplementären Methoden gemessen oder abgeschätzt werden. Beispielsweise kann die Zunahme der Vertrauenswürdigkeit des erkannten Objekts, auch Objektkonfidenz genannt, über eine Existenzwahrscheinlichkeit oder Kovarianz berechnet werden, nachdem eine Messung in das Umgebungsmodell integriert wurde. War das erkannte Objekt noch nicht im Umgebungsmodell vorhanden, so kann die Konfidenz, bevor die Messung in das Umgebungsmodell integriert wird, gleich null gesetzt werden. Messungen, die die Objektkonfidenz erheblich erhöhen, sollten mit höherer Priorität übertragen werden:
$p_5$ = Abweichung

Unter Abweichung ist eine Abweichung zwischen der Objektkonfidenz, nachdem die Messung in das Umgebungsmodell integriert wurde, und der Objektkonfidenz, bevor die Messung in das Umgebungsmodell integriert wurde, zu verstehen. Die Abweichung kann beispielsweise durch eine Subtraktion oder einen Quotienten ausgedrückt sein.

Ebenso können dynamische Eigenschaften eines Objekts erfasst werden, etwa absolute Werte von dessen Geschwindigkeit oder Beschleunigung. Objekte mit höherer Dynamik sollten mit entsprechend höherer Priorität übertragen werden:

$p_1$ = |Geschwindigkeit des Objekts|

$p_2$ = |Beschleunigung des Objekts|

Zusätzlich kann eine Änderung der dynamischen Eigenschaften des Objekts erfasst werden, nachdem die Messung in das Umgebungsmodell integriert wurde. Messungen, durch die die dynamischen Eigenschaften des Objekts erheblich verändert werden, sollten mit höherer Priorität übertragen werden:

$p_6$ = Abweichung (Abweichung zwischen einer Objektposition, nachdem die Messung in das Umgebungsmodell integriert wurde, und einer Objektposition, bevor die Messung in das Umgebungsmodell integriert wurde)

$p_7$ = Abweichung (Abweichung zwischen einer Objektgeschwindigkeit, nachdem die Messung in das Umgebungsmodell integriert wurde, und einer Objektgeschwindigkeit, bevor die Messung in das Umgebungsmodell integriert wurde)

$p_8$ = Abweichung (Abweichung zwischen einer Objektbeschleunigung, nachdem die Messung in das Umgebungsmodell integriert wurde, und einer Objektbeschleunigung, bevor die Messung in das Umgebungsmodell integriert wurde)

Dabei kann optional zwischen einer Positionsänderung quer zum Verkehrsfluss und einer Positionsänderung längs zum Verkehrsfluss unterschieden werden, wobei letztere eine geringere Relevanz als erstere hat.

3. Wie wahrscheinlich ist eine Kollision des erkannten Objekts 116 mit einem benachbarten Fahrzeug?

Dazu wird eine voraussichtliche Trajektorie des erkannten Objekts 116 und aller Fahrzeuge im Umgebungsmodell ermittelt. Anhand der voraussichtlichen Trajektorien wird für jedes Fahrzeug eine Zeit bis zu einer möglichen Kollision mit dem erkannten Objekt berechnet, auch time to collision (TTC) genannt. Erkannte Objekte mit einer kürzeren Zeit bis zur Kollision sollten mit höherer Priorität an andere Fahrzeuge übertragen werden:

$p_9$ = min TTC (zwischen einem erkannten Objekt und allen Fahrzeugen im Umgebungsmodell)

4. Welchem Objekttyp kann das erkannte Objekt 116 zugeordnet werden?

Das erkannte Objekt 116 kann anhand verschiedener Objektklassen wie beispielsweise Fußgänger, Radfahrer, Pkw oder Lkw klassifiziert werden. Besonders gefährdete Verkehrsteilnehmer wie Fußgänger oder Radfahrer sollten eine höhere Priorität haben, da für sie das Kollisionsrisiko aufgrund von Unsicherheiten in der Vorhersage ihrer Trajektorie schwerer abzuschätzen ist und sie aufgrund ihrer geringeren Größe möglicherweise von anderen Fahrzeugen schwerer zu erkennen sind:

$p_3$ = f(Objektklasse)

5. Wie viel Verdeckung verursacht das erkannte Objekt 116?

Das erkannte Objekt 116 kann andere Objekte teilweise oder ganz verdecken, sodass diese durch das Fahrzeug 100 nicht mehr erfasst werden können. Beispielsweise kann ein geparkter Lkw die Erkennung dahinter befindlicher Fahrzeuge oder Fußgänger verhindern oder erschweren. Der durch das erkannte Objekt 116 relevante verdeckte Bereich kann durch das Umgebungsmodell geschätzt werden. Erkannte Objekte, die eine große Verdeckung erzeugen, sollten mit höherer Priorität übertragen werden:

$p_{10}$ = durch das erkannte Objekt verdeckter relevanter Bereich

6. Wann wurde zuletzt eine Objektnachricht 118 mit Informationen über das erkannte Objekt 116 versendet?

Wenn schon länger keine Objektnachricht mit Bezug auf das erkannte Objekt 16 mehr versendet wurde, ist es möglich, dass diesbezügliche Daten benachbarter Fahrzeuge nicht mehr aktuell sind. Dementsprechend sollte das erkannte Objekt 116 eine höhere Priorität erhalten. Wird zum ersten Mal eine Objektnachricht 118 bezüglich des erkannten Objekts 116 gesendet, so wird die Priorität beispielsweise zunächst auf einen Default-Wert gesetzt.

$p_{11}$ = Zeit seit dem letzten Senden einer Objektnachricht 118 bezüglich des erkannten Objekts 116

7. Wann wurde zuletzt eine Objektnachricht mit Informationen über das erkannte Objekt 116 empfangen?

Wenn schon länger keine Objektnachricht mit Bezug auf das erkannte Objekt 116 mehr empfangen wurde, könnte es sein, dass benachbarte Fahrzeuge das Objekt mit ihren Bordsensoren nicht erkennen können. Dementsprechend sollte das erkannte Objekt 116 eine höhere Priorität erhalten. Wurde noch keine Objektnachricht bezüglich des erkannten Objekts 116 empfangen, so wird die Priorität beispielsweise zunächst auf einen Default-Wert gesetzt:

$p_{12}$ = Zeit seit dem letzten Empfangen einer Objektnachricht bezüglich des erkannten Objekts 116

Sobald alle Prioritätswerte $p_i$ berechnet wurden, werden die Prioritätswerte $p_i$ unter Verwendung einer geeigneten Funktion von $p_i$ zu der Objektübertragungspriorität p kombiniert. Eine solche Funktion kann beispielsweise eine gewichtete Summe $p = \Sigma p_i \cdot w_i$, ein

gewichtetes Produkt $p = \prod p_i^{w_i}$ oder eine Kombination davon sein, wobei $w_i$ Gewichte darstellen, durch die die Prioritätswerte $p_i$ unter Berücksichtigung ihrer unterschiedlichen Wichtigkeit miteinander vergleichbar gemacht werden.

Die Liste der erkannten Objekte mit den Objektübertragungsprioritäten kann beispielsweise periodisch an ein Übertragungsprotokoll gesendet werden. Das Übertragungsprotokoll kann anhand der Objektübertragungsprioritäten p auswählen, welche der erkannten Objekte übertragen werden sollen. Wenn die Anzahl der ausgewählten Objekte größer als null ist, wird eine Objektnachricht 118 generiert. Andernfalls wird beispielsweise keine Objektnachricht 118 generiert.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

**Patentansprüche**

1. Verfahren (300) zum Bereitstellen einer Objektnachricht (118) über ein in einer Umgebung eines Verkehrsteilnehmers (100) erkanntes Objekt (116) in einem Kommunikationsnetzwerk zur Kommunikation mit anderen Verkehrsteilnehmern (116), wobei der Verkehrsteilnehmer (100) eine Sensorik (104) zum Erfassen der Umgebung und eine Auswerteeinheit (102) zum Auswerten von durch die Sensorik (104) erzeugten Sensordaten (106) und Übertragen von Objektnachrichten (118) über das Kommunikationsnetzwerk aufweist, wobei das Verfahren (300) umfasst:

   Empfangen (310) von durch die Sensorik (104) erzeugten Sensordaten (106) in der Auswerteeinheit (102);
   Erkennen (320) mindestens eines Objekts (116) in der Umgebung des Verkehrsteilnehmers (100) basierend auf den Sensordaten (106), wobei mindestens ein eine Bewegung des Objekts (116) beschreibender Bewegungsparameter ($p_1$, $p_2$) und/oder mindestens ein eine weitere Eigenschaft des Objekts (116) beschreibender weiterer Objektparameter ($p_3$) ermittelt werden;
   Berechnen (330) einer Objektübertragungspriorität (p) aus dem Bewegungsparameter ($p_1$, $p_2$) und/oder dem weiteren Objektparameter ($p_3$), wobei die Objektübertragungspriorität (p) eine Relevanz des erkannten Objekts (116) für den Verkehrsteilnehmer (100) und/oder die anderen Verkehrsteilnehmer (116) repräsentiert, wobei der Bewegungsparameter ($p_1$, $p_2$) und/oder der weitere Objektparameter ($p_3$) gewichtet wird und die Objektübertragungspriorität (p) aus dem gewichteten Bewegungsparameter ($p_1$, $p_2$) und/oder dem gewichteten weiteren Objektparameter ($p_3$) berechnet wird, wobei jedem erkannten Objekt genau eine Objektübertragungspriorität zugeordnet ist;
   Bestimmen (340) anhand der Objektübertragungspriorität (p), ob das erkannte Objekt (116) in eine Objektnachricht (118) aufgenommen werden soll; und
   wenn ja: Generieren (350) der Objektnachricht (118) mit dem erkannten Objekt (116) und Versenden (350) der Objektnachricht (118) über das Kommunikationsnetzwerk.

2. Verfahren (300) nach Anspruch 1,

wobei der Bewegungsparameter ($p_1$, $p_2$) und der weitere Objektparameter ($p_3$) miteinander addiert und/oder multipliziert werden, um die Objektübertragungspriorität (p) zu berechnen.

3. Verfahren (300) nach Anspruch 1 oder 2,

   wobei der Bewegungsparameter ($p_1$, $p_2$) angibt, ob sich das erkannte Objekt (116) längs und/oder quer zu einer Fahrtrichtung des Verkehrsteilnehmers (100) bewegt;
   wobei der Bewegungsparameter ($p_1$, $p_2$) höher gewichtet wird, wenn sich das erkannte Objekt (116) quer zur Fahrtrichtung bewegt; und/oder
   wobei der Bewegungsparameter ($p_1$, $p_2$) niedriger gewichtet wird, wenn sich das erkannte Objekt (116) längs zur Fahrtrichtung bewegt.

4. Verfahren (300) nach einem der vorhergehenden Ansprüche, weiter umfassend:

   Einfügen des erkannten Objekts (116) in ein die Umgebung des Verkehrsteilnehmers (100) repräsentierendes Umgebungsmodell, wobei das Umgebungsmodell den Bewegungsparameter ($p_1$, $p_2$) und/oder den weiteren Objektparameter ($p_3$) speichert;
   wobei der gespeicherte Bewegungsparameter ($p_1$, $p_2$) und/oder der gespeicherte weitere Objektparameter ($p_3$) basierend auf den Sensordaten (106) in aufeinanderfolgenden Zeitschritten aktualisiert werden;
   wobei eine Änderung des gespeicherten Bewegungsparameters ($p_1$, $p_2$) und/oder eine Änderung des gespeicherten weiteren Objektparameters ($p_3$) zwischen mindestens zwei Zeitschritten ermittelt wird;
   wobei die Objektübertragungspriorität (p) aus der Änderung des gespeicherten Bewegungsparameters ($p_1$, $p_2$) und/oder der Änderung des gespeicherten weiteren Objektparameters ($p_3$) berechnet wird.

5. Auswerteeinheit (102), die ausgeführt ist, um das Verfahren (300) nach einem der vorhergehenden Ansprüche durchzuführen.

6. Computerprogramm, das, wenn es auf einem Prozessor ausgeführt wird, das Verfahren (300) nach einem der Ansprüche 1 bis 4 durchführt.

7. Computerlesbares Medium, auf dem ein Computerprogramm nach Anspruch 6 gespeichert ist.

**Claims**

1. Method (300) for providing an object message (118) relating to an object (116) detected in an environment of a road user (100) in a communication network for communicating with other road users (116), wherein the road user (100) has a sensor system (104) for capturing the environment and an evaluation unit (102) for evaluating sensor data (106) generated by the sensor system (104) and transmitting object messages (118) via the communication network, wherein the method (300) comprises:

receiving (310) sensor data (106) generated by the sensor system (104) in the evaluation unit (102);

detecting (320) at least one object (116) in the environment of the road user (100) on the basis of the sensor data (106), wherein at least one movement parameter ($p_1$, $p_2$) describing a movement of the object (116) and/or at least one further object parameter ($p_3$) describing a further property of the object (116) is/are determined;

calculating (330) an object transmission priority (p) from the movement parameter ($p_1$, $p_2$) and/or the further object parameter ($p_3$), wherein the object transmission priority (p) represents a relevance of the detected object (116) to the road user (100) and/or the other road users (116), wherein the movement parameter ($p_1$, $p_2$) and/or the further object parameter ($p_3$) is/are weighted and the object transmission priority (p) is calculated from the weighted movement parameter ($p_1$, $p_2$) and/or the weighted further object parameter ($p_3$), wherein precisely one object transmission priority is assigned to each detected object;

determining (340), on the basis of the object transmission priority (p), whether the detected object (116) is intended to be included in an object message (118); and

if so: generating (350) the object message (118) with the detected object (116) and transmitting (350) the object message (118) via the communication network.

2. Method (300) according to Claim 1,
wherein the movement parameter ($p_1$, $p_2$) and the further object parameter ($p_3$) are added to one another and/or multiplied by one another in order to calculate the object transmission priority (p).

3. Method (300) according to Claim 1 or 2,

wherein the movement parameter ($p_1$, $p_2$) indicates whether the detected object (116) is moving longitudinally and/or transversely with respect to a direction of travel of the road user (100); wherein the movement parameter ($p_1$, $p_2$) is given a higher weighting when the detected object (116) is moving transversely with respect to the direction of travel; and/or
wherein the movement parameter ($p_1$, $p_2$) is given a lower weighting when the detected object (116) is moving longitudinally with respect to the direction of travel.

4. Method (300) according to one of the preceding claims, also comprising:

inserting the detected object (116) into an environmental model representing the environment of the road user (100), wherein the environmental model stores the movement parameter ($p_1$, $p_2$) and/or the further object parameter ($p_3$);
wherein the stored movement parameter ($p_1$, $p_2$) and/or the stored further object parameter ($p_3$) is/are updated in successive time steps on the basis of the sensor data (106);
wherein a change in the stored movement parameter ($p_1$, $p_2$) and/or a change in the stored further object parameter ($p_3$) between at least two time steps is/are determined;
wherein the object transmission priority (p) is calculated from the change in the stored movement parameter ($p_1$, $p_2$) and/or the change in the stored further object parameter ($p_3$).

5. Evaluation unit (102) which is configured to carry out the method (300) according to one of the preceding claims.

6. Computer program which, when executed on a processor, carries out the method (300) according to one of Claims 1 to 4.

7. Computer-readable medium on which a computer program according to Claim 6 is stored.

**Revendications**

1. Procédé (300) permettant de fournir un message d'objet (118) concernant un objet (116) identifié dans un environnement d'un usager de la route (100) dans un réseau de communication pour communiquer avec d'autres usagers de la route (116), dans lequel l'usager de la route (100) présente un système de capteurs (104) pour détecter l'environnement et une unité d'évaluation (102) pour évaluer des données de capteur (106) générées par le système de capteurs (104), et pour transmettre des messages d'objet (118) par le réseau de communication, dans lequel le procédé (300) comprend les étapes consistant à :

recevoir (310) dans l'unité d'évaluation (102) des données de capteur (106) générées par le système de capteurs (104) ;

identifier (320) au moins un objet (116) dans l'environnement de l'usager de la route (100) sur la base des données de capteur (106), dans lequel au moins un paramètre de déplacement ($p_1$, $p_2$) décrivant un déplacement de l'objet (116), et/ou au moins un paramètre d'objet ($p_3$) décrivant au moins une autre propriété de l'objet (116) sont établis ;

calculer (330) une priorité de transmission d'objet (p) à partir du paramètre de déplacement ($p_1$, $p_2$) et/ou de l'autre paramètre d'objet ($p_3$), dans lequel la priorité de transmission d'objet (p) représente une pertinence de l'objet identifié (116) pour l'usager de la route (100) et/ou pour les autres usagers de la route (116), dans lequel le paramètre de déplacement ($p_1$, $p_2$) et/ou l'autre paramètre d'objet ($p_3$) sont pondérés, et la priorité de transmission d'objet (p) est calculée à partir du paramètre de déplacement pondéré ($p_1$, $p_2$) et/ou de l'autre paramètre d'objet pondéré ($p_3$), dans lequel exactement une priorité de transmission d'objet est associée à chaque objet identifié ;

déterminer (340) à l'aide de la priorité de transmission d'objet (p) si l'objet identifié (116) doit être inclus dans un message d'objet (118) ; et si oui : générer (350) le message d'objet (118) avec l'objet identifié (116) et envoyer (350) le message d'objet (118) par le réseau de communication.

**2.** Procédé (300) selon la revendication 1, dans lequel le paramètre de déplacement ($p_1$, $p_2$) et l'autre paramètre d'objet ($p_3$) sont additionnés et/ou multipliés afin de calculer la priorité de transmission d'objet (p).

**3.** Procédé (300) selon la revendication 1 ou 2, dans lequel le paramètre de déplacement ($p_1$, $p_2$) indique si l'objet identifié (116) se déplace longitudinalement et/ou transversalement par rapport au sens de la marche de l'usager de la route (100) ;

dans lequel le paramètre de déplacement ($p_1$, $p_2$) est pondéré plus fortement si l'objet identifié (116) se déplace transversalement par rapport au sens de la marche ; et/ou

dans lequel le paramètre de déplacement ($p_1$, $p_2$) est pondéré moins fortement si l'objet identifié (116) se déplace longitudinalement par rapport au sens de la marche.

**4.** Procédé (300) selon l'une quelconque des revendications précédentes, comprenant en outre :

l'insertion de l'objet identifié (116) dans un modèle d'environnement représentant l'environnement de l'usager de la route (100), le modèle d'environnement stockant le paramètre de déplacement ($p_1$, $p_2$) et/ou l'autre paramètre d'objet ($p_3$) ;

dans lequel le paramètre de déplacement stocké ($p_1$, $p_2$) et/ou l'autre paramètre d'objet stocké ($p_3$) sont mis à jour sur la base des données de capteur (106) dans des incréments de temps consécutifs ;

dans lequel une variation du paramètre de déplacement stocké ($p_1$, $p_2$) et/ou une variation de l'autre paramètre d'objet stocké ($p_3$) est établie entre au moins deux incréments de temps ;

dans lequel la priorité de transmission d'objet (p) est calculée à partir de la variation du paramètre de déplacement stocké ($p_1$, $p_2$) et/ou de la variation de l'autre paramètre d'objet stocké ($p_3$).

**5.** Unité d'évaluation (102) qui est réalisée pour effectuer le procédé (300) selon l'une quelconque des revendications précédentes.

**6.** Programme informatique qui, lorsqu'il s'exécute sur un processeur, effectue le procédé (300) selon l'une quelconque des revendications 1 à 4.

**7.** Support lisible par ordinateur sur lequel est stocké un programme informatique selon la revendication 6.

Fig. 1

106

112

200

$p_1, p_2, p_3$

$p_1, p_2, p_3, p_i$

202

p

204

118

**Fig. 2**

300

310

320

330

340

350

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3678438 A1
- DE 102014008746 A1

- WO 2019074348 A1